# EUROPEAN PATENT APPLICATION

(11) **EP 2 597 753 A2**
(43) Date of publication of application: **29.05.2013**
(21) Application number: 12193314.7
(22) Date of filing: 20.11.2012
(51) Int. Cl.: H02K 1/27, H02K 15/03, H02K 15/12

(54) **Improved method for coating a rotor of a permanent magnet electric motor used in a household appliance pump with plastic material and a rotor thus obtained**

(30) Priority: 25.11.2011 IT MI20112149
(71) Applicant: Sisme S.p.A., 20124 Milano (IT)
(72) Inventor: Greco, Bruno Roberto, 21020 Casciago (Varese) (IT)
(74) Representative: Ripamonti, Enrico

(57) **Abstract**

A method for coating a rotor (1) of a permanent magnet electric motor (4) for a household appliance pump with plastic material, for making it airtight with respect to the external fluids, said rotor (1) comprising a rotor core (3) with permanent magnets (4) and a motion transmission shaft (5), said method comprising the insertion of the components (3, 4, 5) of the rotor (1) in a mould (22) with an extraction side half-mould (23) and one on the injection side (24) provided with pins (26, 40 and 32, 42) for centring and supporting such components. During moulding, detachment and recession of the pins (26, 32, 40, 42) of the two half-moulds (23, 24) are provided for, at different times without interrupting the injection so that the material encloses such components and entirely covers them with a continuous and homogeneous layer of plastic material. The rotor thus obtained is also claimed.

## Description

An improved method for coating a rotor of a permanent magnet electric motor adapted to be used in a pumping fluid of a motor pump for a household appliance such as a dishwasher with plastic material, insulating against fluids, according to the preamble of the main claim forms an object of the present invention. A rotor for an electric motor of the aforementioned type according to the corresponding preamble of the main claim also forms an object of the invention.

As known, a rotor of an electric motor of a motor pump used, for example, in a dishwasher could be designed for operating in the aqueous washing fluid with possible additives (detergents, oils, fats, etc). Given that such rotor is constituted by a motion transmission shaft (usually obtained using material resistant against the attack of the aforementioned fluids, such as stainless steel or ceramics), and by a rotor core made of iron (generally laminated) for closing the magnetic flow to which permanent magnets are associated, it is necessary to provide for a suitable sealing of such rotor against fluids so that it does not lose the mechanical and electrical characteristics over time, in cases where it comprises components (the core and the magnets) that are subject to oxidation (and thus deterioration) should they come to contact with an aqueous fluid.

For such reason, there are known various solutions adapted to allow the insulation of the rotor against such fluid. One of them is described in US2007/0210663 and in the parallel European text EP1841041 thereof in which there is described a production method where, with different steps and separate from each other, the rotor is coated with insulating plastic material (which wraps or encloses the components thereof). In particular, after a first moulding of such material around the rotor core and therewithin, in order to constrain the rotor shaft to the latter, the permanent magnets are inserted in circumferential seats suitably generated around the core and thus the entirety (core and magnets) is coated, through a subsequent moulding step, with the same plastic material.

The text states that the plastic material of the second injection is virtually made in a single piece with that of the first injection. However, between the two layers of plastic material there is however present a clear separation due to the fact that the second injection bears new plastic material on an already cooled and consolidated layer made of other plastic material. Such clear separation may virtually lead to localised infiltrations of aqueous fluid between the layers of plastic material with possible deterioration of the components of the rotor underlying the second layer and exposed to such fluid.

An object of the present invention is to provide a method for making rotors for electric motors for pumps adapted to be submerged in an aqueous fluid and to obtain a rotor of such type capable of overcoming the drawbacks of the known solutions and methods of the prior art.

In particular, an object of the invention is to provide a method capable of allowing obtaining a rotor of the mentioned type that is coated by a layer made of material resistant to aqueous fluids that is homogeneous and that is highly compact so as to obtain an ideal protection of the rotor against such fluids.

A further object is that of providing a method of the mentioned type that is quick to implement and that allows obtaining a rotor coated efficiently by a layer of protective plastic in a single moulding step in the production process.

These and other objects which will be evident to a man skilled in the art are attained by a method and by a rotor according to the attached claims.

For a better understanding of the present invention, the following drawings are attached purely by way of nonlimiting example, wherein:
figures 1A, 1B, 1C show - in exploded and perspective view - various configurations of embodiments of a part (core and magnets) of a rotor to be subjected to the method according to the invention;

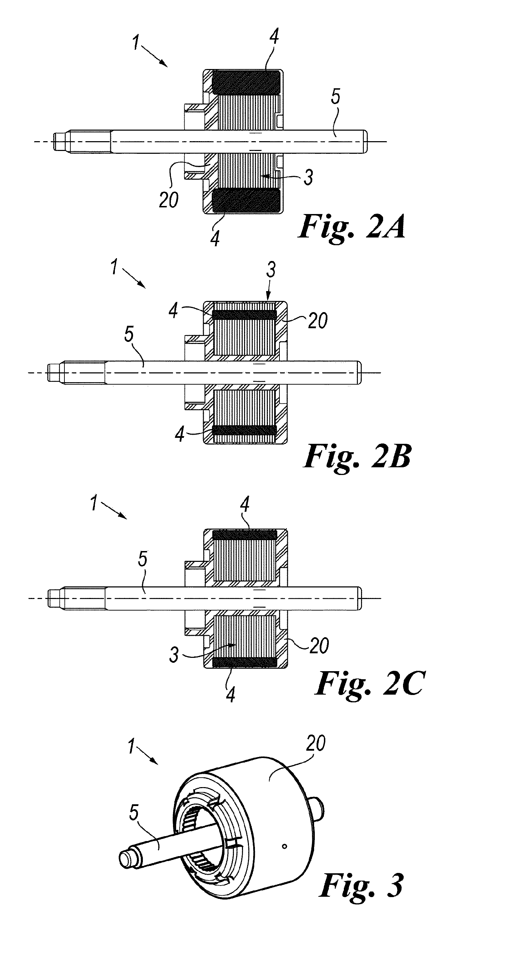

figures 2A, 2B, 2C show longitudinal sectional views of rotors corresponding to the parts shown in figures 1A, 1B, 1C and obtained according to the invention;
figure 3 shows a perspective view of a rotor obtained according to the invention;
figures 4A, 4B, 4C, 4D, 4E show - in longitudinal section - the various implementation steps of the method for moulding (co-moulding) the components using plastic material according to the invention; and
figures 5A and 5B respectively show a detail for providing a rotor obtained according to the invention with a detail associated thereto.

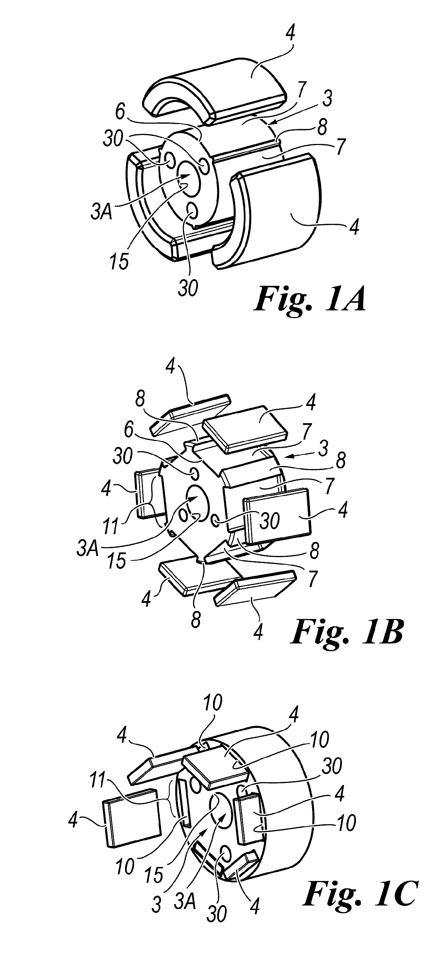

With reference to the aforementioned figures, a rotor for an electric motor adapted to be used in a household appliance pump is generally indicated with 1 and comprises a rotor core 3 having an axial central hole 3A adapted to contain a motion transmission shaft or drive shaft 5. Such core (3) supports permanent magnets 4 which, according to the configuration of the chosen project, can be placed on an outer surface 6 of the core 3, in seats 7 delimited by longitudinal shoulders 8, or in cavities 10 provided in the body 11 of the core 3. The latter two configurations are in particular used in case of rare earth magnets, while in the case where the magnets are made of ferrite they are generally arranged (for example, pre-bonded) on the outer surface 6. The configuration of the magnets 4 is generally parallelepiped-shaped in case of rare earth magnets (figures 1B and 1C) and of the arched or curved type in case of ferrite magnets (figure 1A).

In the various figures there is represented a six-pole rotor 1 with six magnets should they be of the rare earth type (figures 1B and 1C) and with three magnets with double polarity should they be of the ferrite type (figure 1A); however, the shapes of the magnets, the arrangement thereof and the number of poles of the rotor shall not be deemed restrictive with respect to the present invention.

According to the invention, the rotor 1 is entirely coated by a plastic material which insulates it against contact with the aqueous fluid, in which it rotates, during the use of the motor (motor pump) to which the rotor belongs. Such insulating material (plastic resin of the per se known type, such as for example polypropylene filled with glass or the like), defines a continuous layer 20 which wraps or encloses the rotor in every component thereof and i.e. the core 3 thereof, the magnets 4 and the portions between the core and the drive shaft 5 or the surface 15 of the hole 3A of the core 3 in which there is arranged the aforementioned shaft.

The layer 20 does not have discontinuity areas and it is a compact and homogeneous body which covers the rotor especially in the parts thereof (core and magnets) subject to deterioration if submerged in a fluid. Thus, such layer 20 cannot be subjected to infiltrations of such fluid hence ideally protecting the rotor and in particular the core (3) made of iron and the magnets (4) if of the rare earth type.

The coating of these components is obtained through the method according to the invention. This method is implemented in a mould 22 having a first half-mould 23 on the extraction side and a second half-mould 24 on the injection side. The implementation method starts with the introduction - in the first half-mould 23 - of the core 3 with pre-bonded magnets 4 on the surface 6 thereof, if of the ferrite type, or even without such magnets being associated to the core, in case the aforementioned magnets are of the rare earth type and in the configuration 1C. In the latter case, illustrated hereinafter for the sake of clarification, the magnets 4 are inserted into the cavities 10 after positioning the core 3 in the half-mould 23.

The core 3 is axially placed on mobile axial pins 26 present in seats 27 in the extraction side half-mould 23; these pins are initially locked in the state of maximum advancement, provided with a pre-introduction end 28 and an abutment end 29 for corresponding holes 30 present in the core 3, where, once inserted, they perform a radial centring action as well as an axial positioning action of the core.

In the injection side half-mould 24 there are corresponding axial mobile pins 32 adapted to be inserted into seats 33, with ends 35 having a pre-introduction and abutment element 36 adapted to allow the centring thereof on the core 3 upon the closure of the mould 22; however, such pins 32 have a minimum springing or movement in the relative seats 33 with the aim of considering the tolerance on the axial length of the core 3.

At the beginning of the moulding step, also the turns 32 are in the maximum advancement state.

In the two half-moulds, extraction side 23 and injection side 24, there are also present other axially mobile pins 40, 42, initially always in the maximum advancement state, which determine the axial positioning of the magnets 4 with respect to the core 3. The pins 42 on the injection side (upper part of the mould 24) are also mobile so as to consider the tolerance on the axial length of the magnets 4.

In particular should the magnets be pre-bonded, like in configuration 1A, they almost lie on said pins 40, while in the case of a core with inner cavities 10, the magnets are preferably automatically inserted in the latter immediately after inserting the core 3 in the half-mould 23, thus providing a precise axial reference in the aforementioned pins 40. Obviously, also in the latter case, the magnets may be pre-bonded in the cavities 10 of the core 3 or held therein using other per se known systems.

Lastly, the shaft 5 is inserted, passing in the hole 3A of the core 3 when it is already in the mould 20 which provides for housing and centring holes 46 and 47 in half-moulds 23 and 24 for the ends 5A, 5B thereof. The shaft 5 is positioned axially fixed in the extraction side half-mould 23 where there are present extractors 50; a counter-tip 51 with a spring (not shown) is instead present on the half-mould on the opposite side 24.

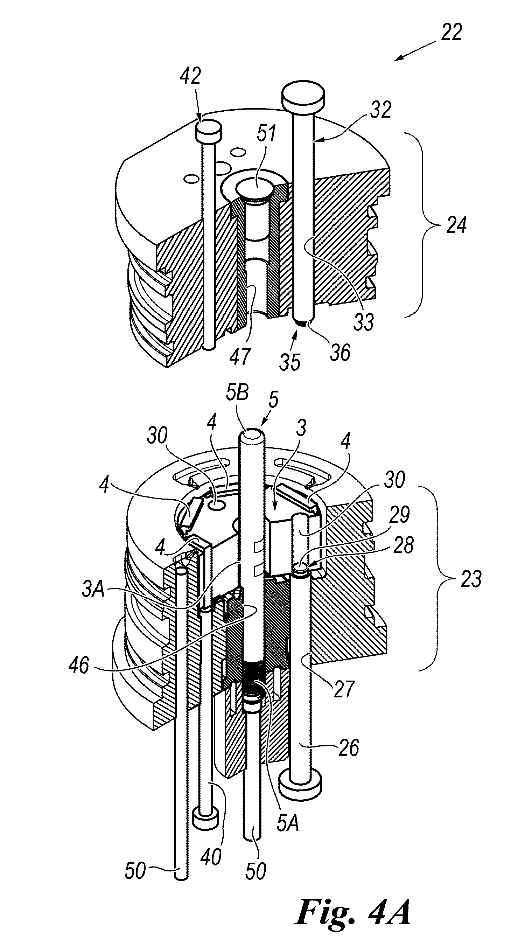

In such positioning (represented in figure 4A) it is suitable that there be provided a sufficient radial space between the shaft 5 and core 3 so that the plastic material may fill it and lead to a better sealing of the rotor. This is obtained through the positioning of the shaft in the hole 46 of the half-mould 23 and the use of the counter-tip 51.

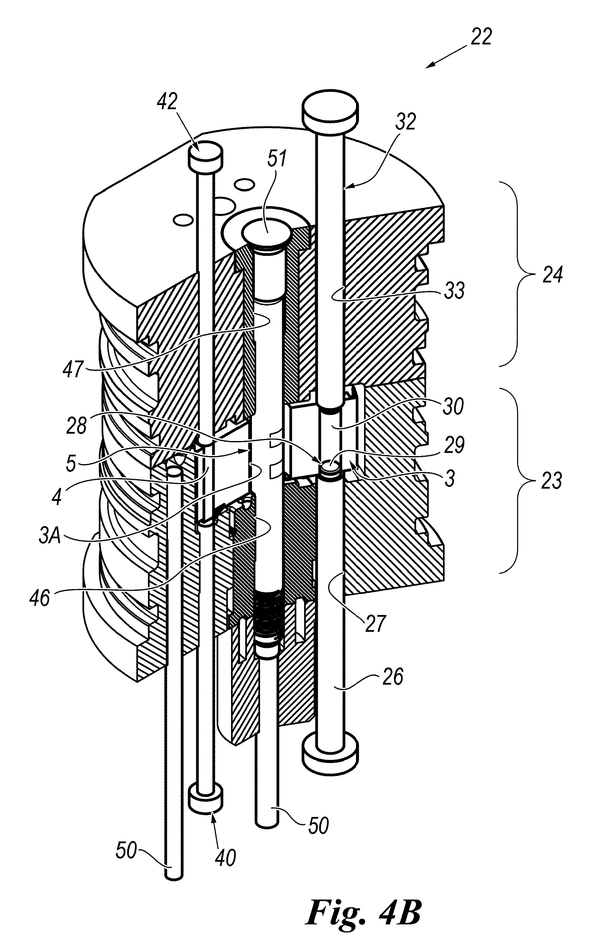

At this point, the mould (figure 4B) is closed, with the half-mould injection side 24 moving towards the other half-mould 23; the shaft 5 centres itself and subsequently the pins are also coupled, centring them, with the core 3 and the magnets.

With all the mobile pins 26, 32, 40,42 in the advanced position laying on the components of the rotor, there starts the flow of the plastic molten material on the injection side 24 and it proceeds in the cavity of the mould 20 towards the other side 23, starting to cool and lock - in a position - the inserts (core 3, magnets 4 and shaft 5) starting from the half-mould of injection 24.

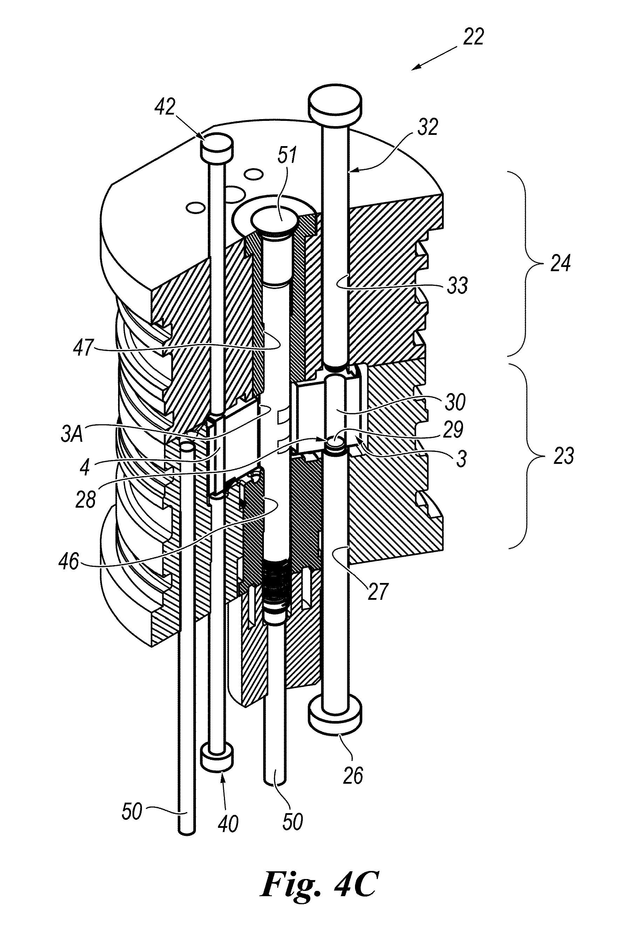

At this point, under the strict control of a control unit (not shown) which determines the correct actuation times of injection, the mobile pins 32, 42 of the injection side half-mould 24 alone, recede by a few millimetres allowing the plastic flow, still in push mode to complete the filling of the spaces previously occupied by the pins (figure 4C).

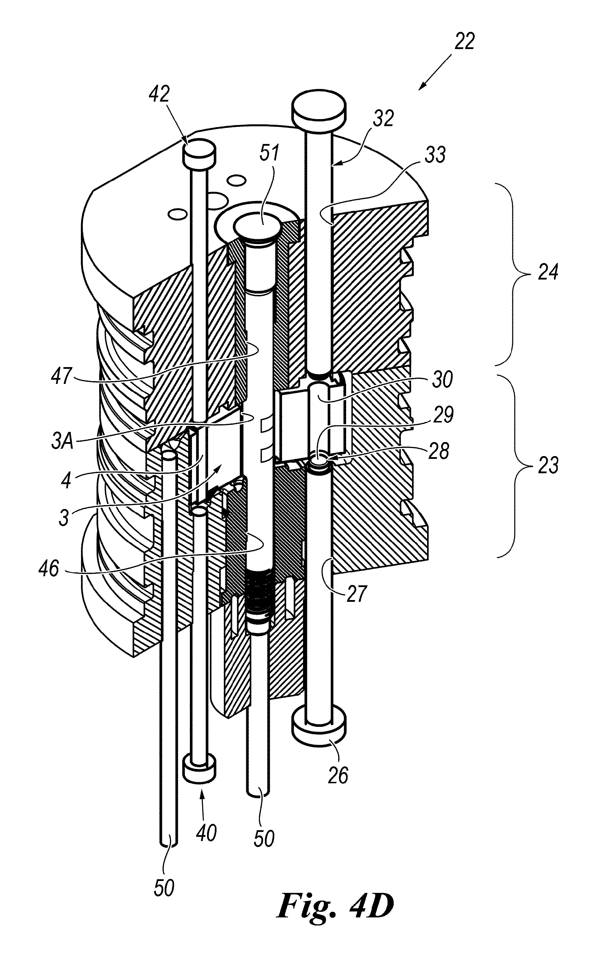

Subsequently, and still under the control of the control unit, for example with microprocessor, also the pins 26 and 32, on the extraction side 23 are receded by a few millimetres and the plastic flow also fill the spaces left vacant by such pins. Thus, there occurs a complete, continuous and homogeneous coating of the rotor with the plastic material (figure 4D).

In the final part of the moulding step, the plastic flow is kept under pressure while the material solidifies in the mould with all the pins 26, 32, 40, 42 retracted and the components of the rotor, except for the shaft 5, held in position by the plastic material alone practically almost solidified.

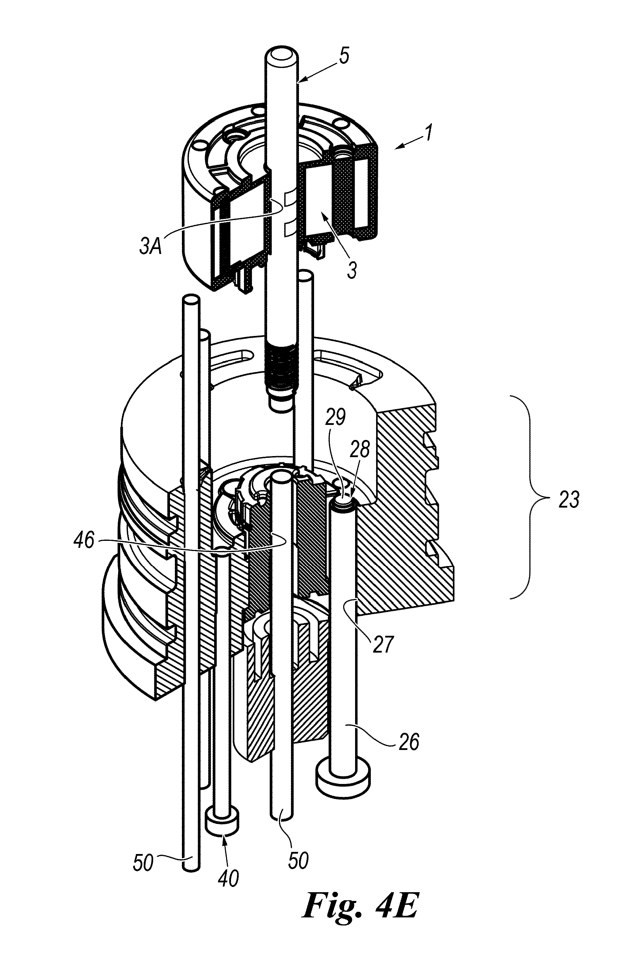

Upon opening the mould, the upper half-mould (injection side 24) is lifted, detaching from the piece, and the extractors 50, arranged in the other half-mould 23 axially push the finished rotor 1 outwards of the extraction side half-mould 23 (figure 4E).

Upon completing the cycle and extracting the rotor, all the mobile pins return in the advanced position state and the extractors are retracted for the next moulding cycle.

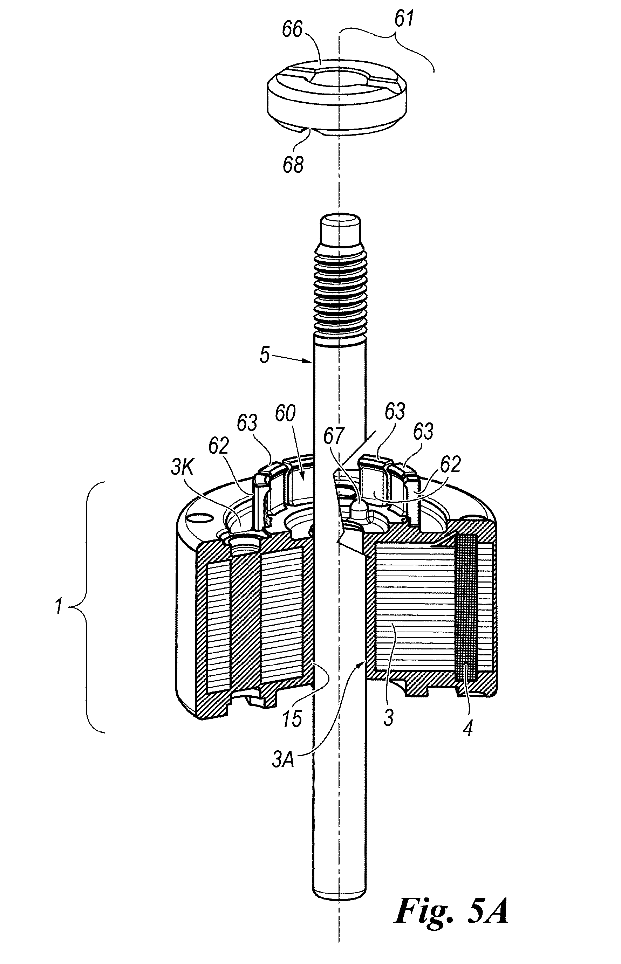

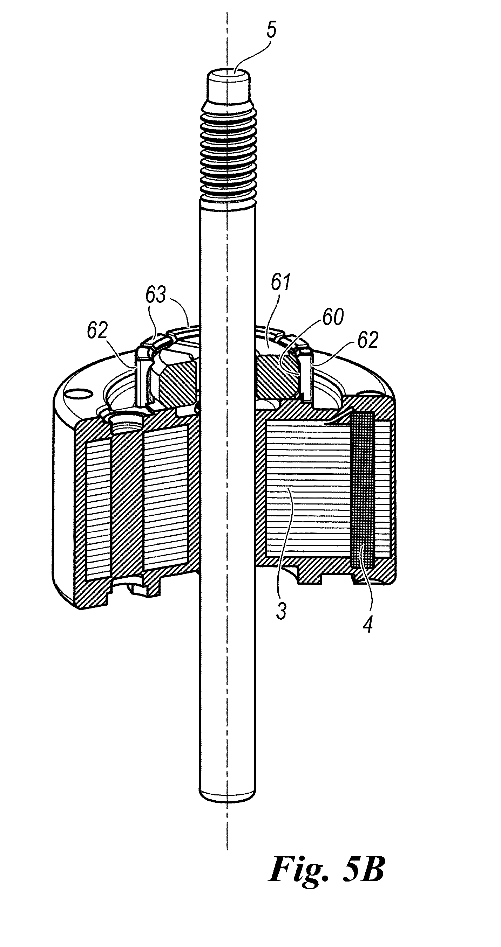

It should be observed the half-mould 23 may be configured so as to create, on one side 3K of the rotor (figure 5A and 5B) a housing 60 intended for a subsequent assembly of a ring 61, made of ceramic or equivalent material, adapted to serve as a sliding counter-face against the shoulder of a fixed bearing, provided for supporting the rotor rotating in the pump. Such housing 60 is delimited by a plurality of projections 62, elastically projecting from such side 3K of the core, which can be elastically diverged and having a notched end 63 (or simply notches 63), folded towards the internal of the housing 60. Such projections 62 are adapted to be "coupled" to the upper edge 66 of the ring 61 through the notches 63 once it has been inserted into the housing 60 so as to be firmly axially held therein. Further protrusions 67, suitably projecting from such side 3K have the function, when inserted in seats or grooves 68 present in the ring 61, of preventing the rotation thereof in the very housing.

The solution is easy to implement and reliable in use.

Various embodiments of the invention have been described. Many others may be provided and they are to be deemed falling within the scope of protection of the following claims.

## Claims

1. Method for coating in a single moulding step the rotor (1) of a permanent magnet electric motor (4) for a household appliance pump, such as a dishwasher or the like, with plastic material so as to isolate it with respect to fluids external with respect thereto, said rotor (1) comprising a rotor core (3) to which there are associated the permanent magnets (4) and a motion transmission shaft (5), said method comprising the insertion of the components (3, 4, 5) of the rotor (1) in a mould (22) having an extraction side half-mould (23) and an injection side half-mould (24) provided with corresponding mobile pins (26, 40; 32, 42) for centring such components, **characterised in that** there is provided for the closure of the two half-moulds (23, 24), the injection of the plastic material therein maintaining said pins (26, 32, 40, 42) initially at contact with such components (3, 4, 5), then a subsequent detachment and recession of the pins (32, 42) on the injection side and sequentially the detachment and recession also of the pins (26, 40) on the extraction side continuing, without interruption, said injection so that such material fills the spaces created between the pins and said components so as to entirely wrap them with a continuous layer, and the final opening of the mould (22) with the extraction of the rotor (1) continuously and homogeneously covered with such material.

2. Method according to claim 1, **characterised in that** the permanent magnets (4) are associated to the core (3) of the rotor before the insertion thereof in the mould (20).

3. Method according to claim 2, **characterised in that** such magnets (4) are bonded to an outer surface (6) of the core of the rotor (3).

4. Method according to claim 1, **characterised in that** said magnets (4) are inserted in cavities (10) of the core of the rotor (3) after the latter has been inserted in the extraction side half-mould (23) of the mould (22) before the closure of the latter.

5. Method according to claim 1, **characterised in that** there is provided for that the extraction side half-mould (23) has mobile axial pins (26, 40) in a position of complete insertion therein before the closure of the mould, on said pins (26, 40) there being centred the core of the rotor (3) and the magnets (4) associated thereto, the pins (26) for the core (3) cooperating with seats (30) present in said core.

6. Method according to claim 1, **characterised in that** the shaft (5) is arranged in the core of the rotor (3) after the latter has been inserted in the extraction side half-mould (23) of such mould (22), said shaft being adapted to cooperate with housing and centring holes (46, 47) of the two half-moulds (23, 24) and being maintained distant from a wall (15) of a hole (3A) of the aforementioned core adapted to receive said shaft (5).

7. Method according to claim 1, **characterised in that** the injection side half-mould (24) has mobile axial pins (32, 42) adapted to cooperate with the core of the rotor (3) and with the magnets (4) associated thereto centring them before or after the closure of the mould (22), such pins (32, 42) partly receding, detaching from such core (3) and magnets (4) after the beginning of said injection of plastic material so as to allow such material to entirely wrap on the injection side said components after the detachment of said pins (32, 42) and before the opening of said mould.

8. Method according to claim 7, **characterised in that** after the detachment of the pins (32, 42) of the injection side half-mould (24), maintaining the plastic material with a pushing action in the mould, also the pins (26, 40) of the extraction side half-mould are detached from the core (3) and from the magnets (4), allowing such plastic material to entirely wrap said components even on the extraction side after the detachment of such pins and before the opening of the mould (22).

9. Method according to claim 1, **characterised in that** the mould (22) is open separating the half-moulds (23, 24) thereof after the plastic material entirely winds all the components (3, 4, 5) of the rotor (1) and after such material has cooled, thus said rotor (1) being ejected from the mould.

10. Rotor for a permanent magnet electric motor for a household appliance pump, such as a dishwasher or the like, said rotor comprising a rotor core (3) to which there are associated the permanent magnets (4) and a motion transmission shaft (5), said shaft (5) being inserted in a seat (3A) of the aforementioned core (3), distant from a wall (15) of such seat, said rotor being obtained through the method according to claim 1, **characterised in that** said rotor (1) is entirely coated by a continuous and homogeneous layer of plastic material adapted to protect the components (3, 4, 5) of such rotor (1) against contact with an aqueous fluid when the motor in which it is mounted is being used.

11. Rotor according to claim 10, **characterised in that**, on one side (3K), it has a plurality of projecting elements (62), obtained in the same moulding step, elastically projecting and provided with notched ends (63) in undercut, adapted to define a housing (60) for a subsequent quick coupling insertion of an annular chute counter-face (61), made of ceramic material or any other suitable material, said counter-face (61) thus being held axially, radially centred, and further protrusions (67) being provided on said side (3K) adapted to be engaged in suitable seats (68) present in the counter-face (61) with the aim of preventing the rotation of such counter-face in the housing.
